**Europäisches Patentamt**

(19) **European Patent Office**

**Office européen des brevets**

(11) Veröffentlichungsnummer: **0 185 919**

**B1**

(12) # EUROPÄISCHE PATENTSCHRIFT

(45) Veröffentlichungstag der Patentschrifft:
07.02.90

(51) Int. Cl. ⁵: **A 01 F 15/14**

(21) Anmeldenummer: **85114619.1**

(22) Anmeldetag: **18.11.85**

(54) **Vorrichtung zum Binden von Rollballen aus landwirtschaftlichem Halmgut.**

(30) Priorität: **11.12.84 DE 3445060**

(43) Veröffentlichungstag der Anmeldung:
**02.07.86 Patentblatt 86/27**

(45) Bekanntmachung des Hinweises auf die Patenterteilung:
**07.02.90 Patentblatt 90/06**

(84) Bennante Vertragsstaaten:
**AT BE CH FR GB IT LI NL**

(56) Entgegenhaltungen:
**FR-A-2 414 295**
**GB-A-2 018 193**
**US-A-3 064 556**

(73) Patentinhaber: **GREENLAND GMBH & CO. KG**
**Erwin-Dietrich-Platz 1**
**D-7702 Gottmadingen (DE)**

(72) Erfinder: **Schaible, Siegfried, Dipl.-Ing.**
**Breslauer Strasse 15**
**D-7700 Singen/Htwl (DE)**
Erfinder: **Kohl, Bernhard, Dipl.-Ing.**
**Lerchenweg 11**
**D-8501 Winkelhaid (DE)**
Erfinder: **Wölfle, Hans-Peter**
**Gartenstrasse 28**
**D-7702 Gottmadingen (DE)**
Erfinder: **Güsewell, Eike**
**Rielasinger Strasse 57**
**D-7702 Gottmadingen (DE)**

(74) Vertreter: **Patentanwälte     Grünecker,   Kinkeldey,**
**Stockmair & Partner**
**Maximilianstrasse 58**
**D-8000 München 22 (DE)**

## Beschreibung

Die Erfindung bezieht sich auf eine Vorrichtung zum Binden von Rollballen aus landwirtschaftlichem Halmgut, bei der Bindegarn von einer Garnrolle über eine gesteuerte Garnleiteinrichtung mit mindestens einem Garnleitarm zur Führung des Bindegarn entlang der Oberfläche des zu umwickelnden Ballens abgezogen und von einer verschiebbaren Schneideinrichtung am Ende des Umwickelvorganges abgetrennt wird.

In der Landtechnik haben sich Großballenpressen, mit denen Rollballen gewickelt werden, durchgesetzt. Am Ende des Wickelvorgangs werden die Rollballen durch eine Bindevorrichtung mit Bindegarn umwickelt, um im Anschluß durch die geöffnete Heckklappe der Rollballenpresse ausgestoßen zu werden.

Aus der älteren europäischen Patentanmeldung EP-A-0 157 898 ist eine Vorrichtung zum Binden von Rollballen aus landwirtschaftlichem Halmgut bekanntgeworden, bei der eine über ein Getriebe, eine Seilscheibe und zwei Pleuelstangen gesteuerte Garnleiteinrichtung mit zwei Garnleitarmen Verwendung findet. Die Garnleitarme werden von einer etwa mittig zum Rollballen liegenden Anfangsstellung in Richtung auf die äußeren Randbereiche und im Anschluß hieran wieder in Richtung auf die Rollballenmitte hin gesteuert. Am Ende dieser Steuerbewegung wird das Bindegarn von einer verschiebbar gelagerten Schneideinrichtung abgetrennt.

Die US-A-3 064 556, von der zur Bildung des Oberbegriff des Hauptanspruchs ausgegangen wurde, zeigt eine Vorrichtung zum Binden von Rollballen mit einer gesteuerten Garnleiteinrichtung mit ebenfalls zwei Garnleitarmen. Die Garnleitarme führen das Bindegarn - ausgehend von den Randzonen des Rollballens zur Mitte hin, bevor eine Schneideinrichtung das Bindegarn am Ende des Umwickelvorgangs abtrennt.

Obwohl sich die Bindezeit mit der bekannten Vorrichtung – verglichen mit einer Vorrichtung mit nur einem Garnleitarm – erheblich reduzieren läßt, hat diese Konstruktion insofern Nachteile, als sich eine nur unzureichende Stabilität der Umhüllung erzielen läßt.

Der vorliegenden Erfindung liegt die Aufgabe zugrunde, eine Vorrichtung zum Binden von Rollballen aus landwirtschaftlichem Halmgut dahingehend zu verbessern, daß die Rollballen bedarfsweise mehrfach mit Bindegarn umhüllt werden, sodaß eine netzartige Umhüllung entsteht, die eine ausreichende Stabilität des Rundballens für den Transport gewährleistet.

Ausgehend von der bekannten Vorrichtung nach der US-A-3 064 556 wird zur Lösung der gestellten Aufgabe vorgeschlagen, daß die Schneideinrichtung über eine Verbindungsstange mit einer Zuglasche verbunden ist, an deren anderem Ende eine Zugfeder, die an einer Querstrebe (14) des Gehäuses so befestigt ist, daß die Zugfeder bestrebt ist, die Schneideinrichtung in ihrer Außerbetriebsstellung zu halten, angreift, und daß am Garnleitarm ein Mitnehmer angeordnet ist, der das Ende der Zuglasche im Verlaufe der Schwenkbewegung des Garnleitarms beaufschlagt, um die Schneideinrichtung in ihre Schneidstellung zu verschieben oder sich unterhalb dieses Endes der Zuglasche bewegt, um die Schneideinrichtung in ihrer Außerbetriebsstellung zu belassen, wobei die Position der Zuglasche in Bezug auf den Mitnehmer über einen schwenkbeweglich gelagerten Doppelarmhebel und einen Steuernocken des Garnleitarms derart steuerbar ist, daß der Mitnehmer spätestens nach zwei aufeinanderfolgenden Schwenkbewegungen des Garnleitarms die Zuglasche beaufschlagt.

Mit der vorgeschlagenen Vorrichtung zum Binden von Rollballen ist es auf einfache Art und Weise möglich, einen fertig gewickelten Rollballen wahlweise entweder einfach oder zweifach mit Bindegarn zu umhüllen. Durch das Zusammenwirken des Doppelsteuernockens und des Doppelarmhebels kann die Position der Zuglasche so beeinflußt werden, daß der am Garnleitarm angeordnete Mitnehmer die Zuglasche zum Verschieben der Schneideinrichtung entweder mitnimmt oder sich unterhalb dieser – ohne Mitnahme – bewegt, um die Position der Schneideinrichtung unverändert zu belassen.

Eine besonders einfache Maßnahme zur Steuerung des Doppelarmhebel federbelastet am Doppelsteuernocken anliegen zu lassen, wobei der Doppelsteuernocken an einem koaxial zum Lagerzapfen des Garnleitarms gelagerten Klinkenrad befestigt ist, welches über einen Klinkenhebel des Garnleitarms schaltbar ist. Mit dieser einfachen Maßnahme wird erreicht, daß der Doppelarmhebel über den Doppelsteuernocken wechselweise mehr oder weniger stark ausgelenkt wird, um die Position der Zuglasche zu bestimmen, in der diese durch den Mitnehmer des Garnleitarms entweder mitgenommen wird oder nicht.

Um die Vorrichtung so einzustellen, daß der fertig gewickelte Rollballen lediglich einfach mit Bindegarn umhüllt wird, ist der Klinkenhebel an einem Lagerzapfen befestigt, der mittels eines Hebels, an dem eine Feder angreift, verschwenkbar gelagert ist, sodaß der Klinkenhebel in eine Außereingriffsstellung zum Klinkenrad überführbar ist. Wenn der Klinkenhebel in seine Außereingriffsstellung überführt ist, erfolgt keine Veränderung der Position des Doppelsteuernockens. Die Position des Doppelsteuernockens wird so vorgewählt, daß der Doppelarmhebel eine Lage einnimmt, in der der Mitnehmer des Garnleitarms bei jedem Schwenkvorgang die Zuglasche beaufschlagt. Mithin wird der fertige Rollballen nur mit einer Lage Bindegarn umhüllt.

Im folgenden wird ein Ausführungsbeispiel der Erfindung anhand der Zeichnung näher erläutert. Hierbei zeigt:

– Fig. 1 eine Rückansicht einer Rollballenpresse mit einer erfindungsgemäßen Bindevorrichtung nach Beendigung des Bindevorgangs;
– Fig. 2 eine vergrößerte Darstellung der Betätigungsanordnung für die Schneideinrichtung;

- Fig. 3 einen Schnitt entlang der Linie A – A von Figur 2 und
- Figuren 4 und 5 zwei weitere vergrößerte Darstellungen der Betätigungsanordnung in verschiedenen Arbeitsstellungen.

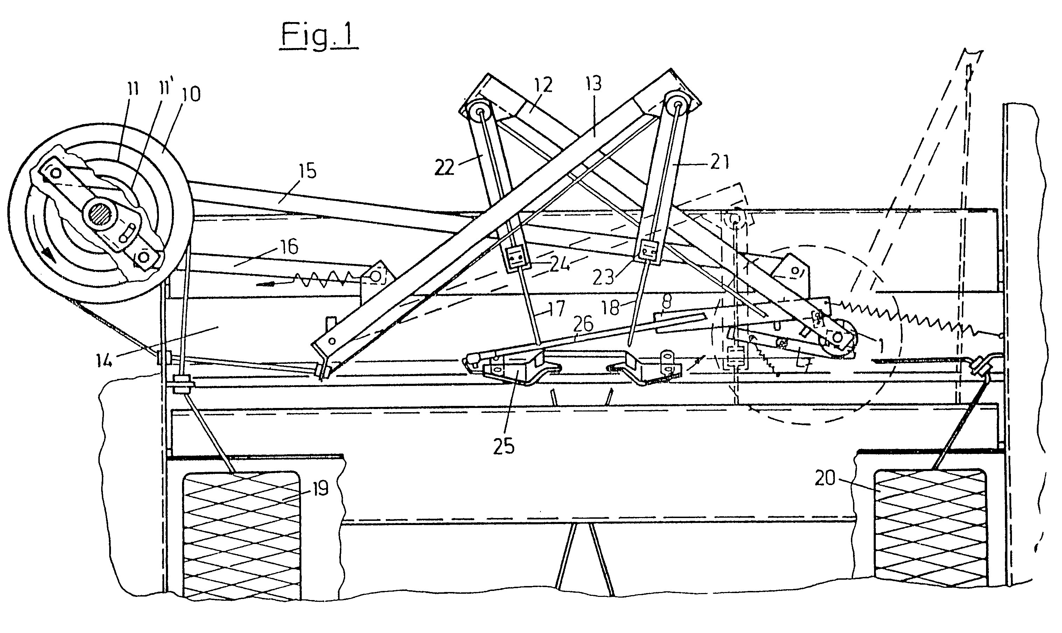

Figur 1 zeigt eine Rückansicht einer Vorrichtung zum Binden von Rollballen. Sofern ein Rollballen nahezu seine endgültige Größe erreicht hat, wird durch eine nicht näher dargestellte Auslöseeinrichtung die Bindevorrichtung entriegelt und ist betriebsbereit. Durch dieses Entriegeln fallen die beiden Garnleitarme 12, 13, die zu Beginn des Bindevorgangs ebenso wie nach Beendigung des Bindevorgangs sich überkreuzen, durch die Schwerkraft ein Stück nach unten, wie es in Figur 1 durch die gestrichelte Position des Garnleitarmes 13 angedeutet ist. Aufgrund der Verbindung zwischen den beiden Garnleitarmen bewegt sich auch der zweite Garnleitarm 12 auf dem gleichen Weg nach unten, wodurch die frei herabhängenden Garnenden 17, 18 in den Einzugsspalt zwischen Rollballen und Preßwalze gelangen und mitgenommen werden.

Die Garnleitarme 12, 13 sind mit ihren unteren Ende verschwenkbar an einer Querstrebe 14 angelenkt, die sich parallel zu den Preßwalzen erstreckt und mit dem Gehäuse der Rundballenpresse fest verbunden ist. Jeder Garnleitarm 12, 13 ist mit einer Pleuelstange 15, 16 mit einem nicht dargestellten Getriebe verbunden, das z. B. ein Planetengetriebe oder ein Klinkentrieb sein kann. Das Getriebe, das eine Untersetzung von 1 : 50 bis 1 : 60 aufweisen kann, ist mit einer Seilscheibe 10 verbunden, die entlang ihres Außenumfangs mehrere Rillen 11, 11' aufweist, die nebeneinander angeordnet sind. Die Pleuelstangen 15, 16 können an einem Kurbeltrieb angelenkt sein, der mit einer der Walzen verbunden ist, die wiederum über eine Schwinge und einen Exzenter mit der Seilscheibe verbunden sind, welche von dem sich abspulenden Garnstrang 18 angetrieben wird. Die Garne 18, 17 werden von Garnvorratsrollen 19, 20 abgegeben, wobei ein Garnstrang 18 zumindest einmal die Seilscheibe 10 umschlingt, dann entlang des Garnleitarmes 12 bis zu dessen oberen freien Ende läuft, an dem ein schwenkbeweglich angebrachtes Verlängerungsstück 21 vorgesehen ist, mit einer an seinem unteren Ende angeordneten Garnbremse 23. Der zweite Garnstrang 17 wird von einer Garnvorratsrolle 20 abgegeben, läuft an dem zweiten Garnleitarm 13 entlang und an dessen schwenkbeweglich angebrachter Verlängerung 22, an der ebenfalls eine Garnbremse 24 vorgesehen ist.

Die Garnleitarme 12, 13 sind gegensinnig verschwenkbar, wobei die Anlenkpunkte an der Querstrebe 21 versetzt bezüglich der Längsachse dieser Querstrebe derart sind, daß sich die Garnleitarme 12, 13 beim gegenseitigen Verschwenken nicht berühren.

Nach Fertigstellung eines Rollballens in der Preßkammer der Rundballenpresse wird die Bindevorrichtung entriegelt, wodurch sich der Garnleitarm 12 aufgrund der Schwerkraft um ein Stück nach unten bewegt. Aufgrund der Verbindung des Garnleitarms 12 über seine Pleuelstange 15 mit dem Getriebe und der Seilscheibe 10 wird der zweite Garnleitarm 13, der in seiner Anfangsstellung den Garnleitarm 12 überkreuzt, ebenfalls um ein Stück nach unten bewegt, so daß die von den Verlängerungsstücken 21, 22 frei herabhängenden Enden der Garne 17, 18 in den Einzugsspalt gelangen und von der sich drehenden Preßwalze sowie dem sich drehenden Rollballen mitgenommen wird. Mit der entsprechenden Geschwindigkeit beginnt sich nun die Seilscheibe 10 zu drehen und betätigt das Getriebe. Aufgrund der Untersetzung durch das Getriebe verschwenken die beiden Garnleitarme 12, 13 erheblich langsamer als es dem Abspulen der beiden Bindegarne 17, 18 entspricht und zwar gegensinnig von der ursprünglichen überkreuzten Anfangsstellung bis zu einer Maximalstellung, die dem Binden der äußeren Enden des Rollballens entspricht und anschließend bis in eine Endstellung, die in etwa der Anfangsstellung beim Binden entspricht und die in Figur 1 dargestellt ist.

Die Umwicklung des Rollballens beginnt also in seiner Mitte und ist, da jeder Garnleitarm etwa einen Viertelkreis beschreibt und zwar in beiden Richtungen, erheblich schneller als bisher üblich beendet unter Erzielung eines gleichmäßigen und festen Bindevorgangs, wobei kurz vor dem Ende des Umwicklungsvorgangs eine weitere Überkreuzung der Garne in der Mitte entsteht. Sowohl zu Beginn des Bindevorgangs als auch vor dessen Ende sind also Überkreuzungen der Bindegarne gewährleistet.

Nach Beendigung des Bindevorgangs wird vollautomatisch eine Schneideinrichtung 25 vorgeschoben, die mit zwei nicht näher dargestellten Schneidmessern bestückt ist um die Bindegarne 17, 18 zu durchtrennen, wonach die Bindevorrichtung stehenbleibt. Die in Figur 1 dargestellte Schneideinrichtung 25 ist beweglich an der Querstrebe 14 angeordnet und kann von einem der Garnleitarme verschoben werden von ihrer Ruhestellung bis in ihre Schneidstellung in der die beiden Garne 17, 18 durchtrennt werden.

Die beiden Garnleitarme 12, 13 führen die beiden Garnstränge 17, 18 in Aussparungen in die Schneideinrichtung 25, in der die beiden sich gegenüberliegenden Messer die Garnstränge durchtrennen.

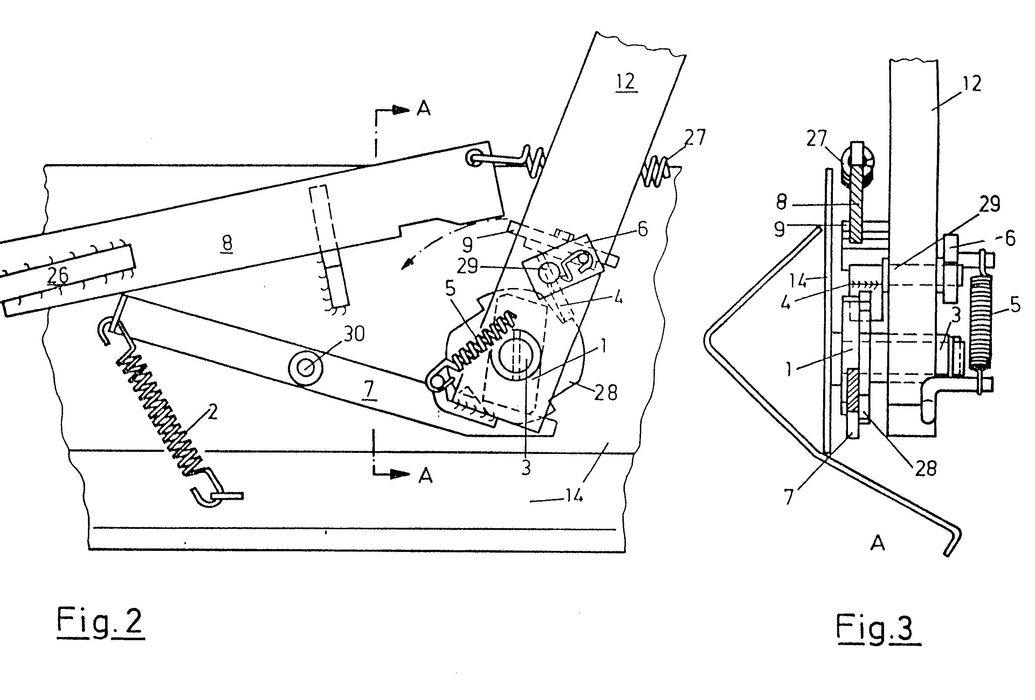

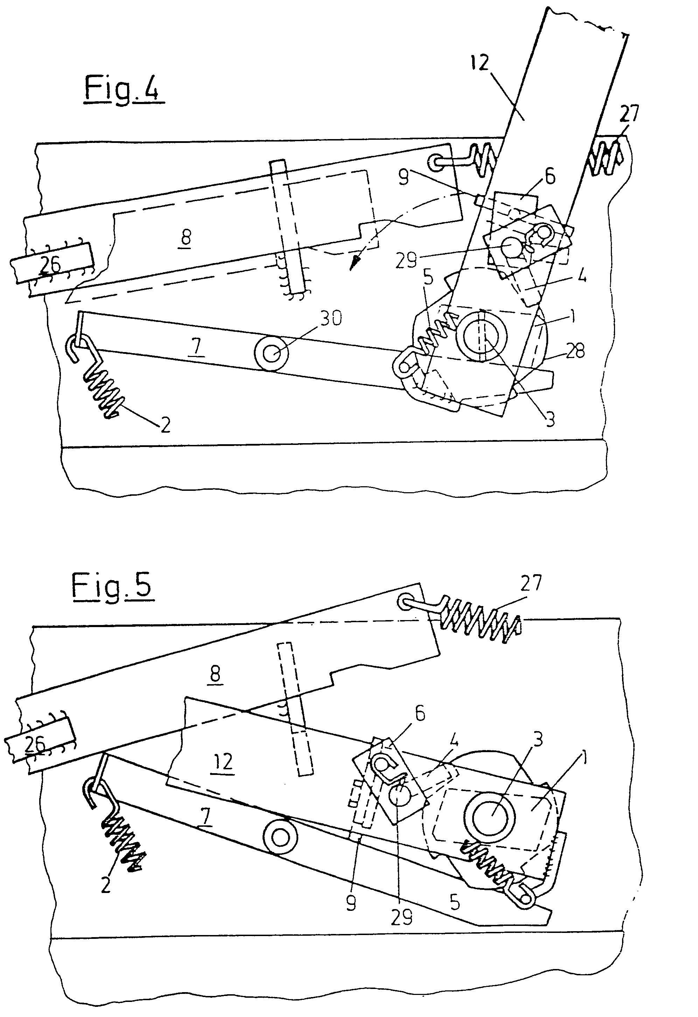

Soll nun ein besonders kurzes und trockenes Preßgut zu einem Rollballen verarbeitet und gebunden werden, so kann es erforderlich sein, statt eines einmaligen Umwicklungszyklus mit anschließendem automatischen Durchtrennen der Garnstränge, ein zweimaliges Umwickeln durchzuführen, bevor die Garnstränge durchtrennt werden um so eine netzartige Umhüllung zu erhalten. Zum Durchtrennen der Garnstränge ist die Schneideinrichtung 25 über eine Verbindungsstange und eine Zuglasche 8 mit einer Zugfeder 27 verbunden (Figuren 2 bis 5), die am Gehäuse der Rundballenpresse angeordnet ist. Diese Zugfeder 27 neigt dazu, die Schneideinrichtung 24 in ihre Außereingriffsstellung zu ziehen.

Die Betätigungseinrichtung für die Schneideinrichtung 25 besteht im wesentlichen aus einem Klinkenschaltwerk und einem Doppelsteuernocken 1, welche mit dem Klinkenschaltwerk fest verbunden ist. Das Klinkenschaltwerk weist dazu ein Klinkenrad 28 auf, das mit dem Doppelsteuernocken 1 fest verbunden ist und auf dem Lagerzapfen 3 für den Garnleitarm 12 angeordnet ist und von diesem betätigt wird. Auf derselben Seite wie das Klinkenrad 28 ist am Garnleitarm 12 ein Klinkenhebel 4 drehbar an einem Lagerzapfen 29 angeordnet, während auf der gegenüberliegenden Seite des Garnleitarms 12 eine Schaltklinke 6 am gleichen Lagerzapfen 29 drehbar angeordnet ist. Die Schaltklinke 6 wird von einer Feder 5 beaufschlagt, deren anderes Ende an einem Doppelarmhebel 7 gelagert ist, der in etwa seiner Mitte über einen Drehzapfen 30 mit der Gehäusewand 14 drehbar angeordnet ist. Das andere Ende des Doppelarmhebels 7 wird von einer Feder 2 beaufschlagt, die ebenfalls an der Gehäusewand 14 befestigt ist.

Der unterhalb des Klinkenschaltwerks angeordnete Doppelarmhebel 7 greift an einem Ende unter die Zuglasche 8 für die Verbindungsstange 26 der Schneideinrichtung 25.

Der mit dem Klinkenschaltwerk fest verbundene Doppelnocken 1 drückt diesen Doppelarmhebel 7 nach unten, so daß die Zuglasche 8 wie die Schneideinrichtung 25 angehoben wird. Dadurch kann ein am Garnleitarm 12 angeordneter Mitnehmer 9 sich unter der Zuglasche 8 für die Schneideinrichtung 25 bewegen ohne die Schneideinrichtung in ihrer Schneidstellung zu verschieben. Beim nächsten Schwenkzyklus des Garnleitarmes 12 liegt nun der Doppelnocken 1 am Klinkenschaltwerk derart, daß der Doppelarmhebel 7 die Zuglasche 8 nicht anheben kann, so daß der am Garnleitarm 12 angeordnete Mitnehmer 9 die Zuglasche 8 so weit verschieben kann, daß die Schneideinrichtung 25 in ihre in Figur 1 dargestellte Schneidstellung gelangt. Nach dem Abschneiden der beiden Garne bleibt die Garnleiteinrichtung stehen. Der fertige Rollballen wird auf diese Weise zweimalig gebunden.

Die Anfederung des Klinkenhebels 4 ist so gestaltet, daß beim Überschieben der Feder 5 über den Totpunkt des Federhebels die Schaltklinke 6 außer Eingriff bleibt. In dieser ausgeschalteten Stellung wird das Bindegarn nach jedem Schwenkzyklus des Garnleitarms abgeschnitten. Demzufolge wird jeder fertige Rollballen nur einmal gebunden.

Bei einem erneuten Inbetriebsetzen der Garnleiteinrichtung fallen die Garnleitarme 12, 13 zunächst frei nach unten. Hierbei schlägt der Mitnehmer 9 am Garnleitarm 12 auf den Doppelarmhebel 7, wodurch die Zuglasche 8 für die Schneideinrichtung angehoben, entriegelt und zurückgezogen wird.

Um den Garnverbrauch und die Bindezeit beim zweimaligen Umfahrens des Rundballens mit Garn nicht auch zu verdoppeln, werden auf der Seilscheibe 10, die gleichzeitig die Antriebsscheibe für das untersetzte nicht dargestellte Kurvengetriebe ist, weitere im Durchmesser kleinere Rillen 11 angebracht.

Anstelle der verschwenkbar gelagerten Garnleitarme ist es auch möglich, eine sich linear zur Rundballenachse bewegte Garnleiteinrichtung zu verwenden, die ebenfalls wahlweise zum ein- oder zweimaligen Umwickeln geeignet ist. In diesem Fall wird zum Ausschalten des Klinkenschaltwerks die Führung des linear bewegten Klinkenhebels so verschoben, daß diese außer Eingriff kommt.

| 1 | Doppelsteuernocken |
| 2 | Federhebel |
| 3 | Lagerzapfen |
| 4 | Klinkenhebel |
| 5 | Feder |
| 6 | Schaltklinke |
| 7 | Doppelarmhebel |
| 8 | Zuglasche |
| 9 | Mitnehmer |
| 10 | Seilscheibe |
| 11 | Rillen |
| 12 | Garnleitarm |
| 13 | Garnleitarm |
| 14 | Querstrebe |
| 15 | Pleuelstange |
| 16 | Pleuelstange |
| 17 | Garn |
| 18 | Garn |
| 19 | Garnvorratsspule |
| 20 | Garnvorratsspule |
| 21 | Verlängerung |
| 22 | Verlängerung |
| 23 | Garnbremse |
| 24 | Garnbremse |
| 25 | Schneideinrichtung |
| 26 | Verbindungsstange |
| 27 | Feder |
| 28 | Klinkenrad |
| 29 | Lagerzapfen |
| 30 | Lagerzapfen |

## Patentansprüche

1. Vorrichtung zum Binden von Rollballen aus landwirtschaftlichem Halmgut, bei der Bindegarn (17) von einer Garnrolle (20) über eine gesteuerte Garnleiteinrichtung mit mindestens einem Garnleitarm (12) zur Führung des Bindegarns (17) entlang der Oberfläche des zu umwickelnden Ballens abgezogen und von einer verschiebbaren Schneideinrichtung (25) am Ende des Umwickelvorgangs abgetrennt wird, dadurch gekennzeichnet, daß die Schneideinrichtung (25) über eine Verbindungsstange (26) mit einer Zuglasche (8) verbunden ist, an deren anderem Ende eine Zugfeder (27), die an einer Querstrebe (14) des Gehäuses so befestigt ist, daß die Zugfeder bestrebt ist, die Schneideinrichtung (25) in ihrer Außerbetriebsstellung zu halten, angreift, und daß am Garnleitarm (12) ein Mitnehmer (9) angeordnet ist, der das Ende der Zuglasche (8) im Verlaufe der Schwenkbewegung des Garnleitarms (12) beaufschlagt, um die Schneideinrichtung (25) in ihre Schneidstellung zu verschieben oder sich unterhalb dieses Endes der Zuglasche (8) bewegt, um die Schneideinrichtung (25) in ihrer Außerbetriebsstellung zu belassen, wobei die Position der Zuglasche (8) in Bezug auf den Mitnehmer (9) über einen schwenkbeweglich gelagerten Doppelarmhebel (7) und einen Doppelsteuernocken (1) des Garnleitarms (12) derart steuerbar ist, daß der Mitnehmer (9) spätestens nach zwei aufeinanderfolgenden Schwenkbewegungen des Garnleitarms (12) die Zuglasche (8) beaufschlagt.

2. Vorrichtung nach Anspruch 1, dadurch gekennzeichnet, daß der Doppelarmhebel (7) federbelastet am Doppelsteuernocken (1) anliegt, der an einem koaxial zum Lagerzapfen (3) des Garnleitarms (12) gelagerten Klinkenrad (28) befestigt ist, wobei dieses über einen Klinkenhebel (4) des Garnleitarms (12) schaltbar ist.

3. Vorrichtung nach Anspruch 2, dadurch gekennzeichnet, daß der Klinkenhebel (4) an einem Lagerzapfen (29) befestigt ist, der mittels eines Hebels (6), an dem eine Feder (5) angreift, verschwenkbar gelagert ist, sodaß der Klinkenhebel (4) in eine Außereingriffsstellung zum Klinkenrad (28) überführbar ist.

## Claims

1. Apparatus for binding round bales of agricultural straw material, wherein binder twine (17) is unwound from a reel of twine (20) by a controlled twine guiding means, having at least one twine guiding arm (12) for guiding the binder twine (17) along the surface of the bale to be bound, and said binder twine is severed by a displaceable cutting means (25) at the end of the binding operation, characterised in that the cutting means (25) is connected to a tension plate (8) via a connecting rod (26), a tension spring (27) engaging with the other end of said tension plate and being so secured on a transverse member (14) of the housing, that the tension spring biases the cutting means (25) towards its inoperative position, and in that an entrainment means (9) is disposed on the twine guiding arm (12) and acts on the end of the tension plate (8) during the pivotal movement of the twine guiding arm (12) in order to displace the cutting means (25) into its cutting position, or said entrainment means moves beneath this end of the tension plate (8) in order to leave the cutting means (25) in its inoperative position, the position of the tension plate (8) relative to the entrainment means (9) being controllable via a pivotally mounted two-armed lever (7) and a dual control cam (1) of the twine guiding arm (12) in such a manner that the entrainment means (9) acts on the tension plate (8) at the latest after two successive pivotal movements of the twine guiding arm (12),

2. Apparatus according to claim 1, characterised in that the two-armed lever (7) abuts, in a springloaded manner, against the dual control cam (1) which is secured on a ratchet wheel (28) mounted coaxially relative to the journal (3) of the twine guiding arm (12), said wheel being controllable via a ratchet lever (4) of the twine guiding arm (12).

3. Apparatus according to claim 2, characterised in that the ratchet lever (4) is secured on a journal (29) which is pivotably mounted by means of a lever (6), with which a spring (5) engages, so that the ratchet lever (4) is transferable into a position of disengagement relative to the ratchet wheel (28).

## Revendications

1. Dispositif pour lier des balles rondes de produits agricoles, où le fil de liaison (17) est retiré d'un rouleau de fil (20), par un système commandé de guidage du fil avec au moins un bras (12) de guidage du fil, pour guider le fil de liaison (17) le long de la surface supérieure de la balle à ficeler, et est séparé par un système mobile de coupe (25) à la fin du processus de ficelage, caractérisé en ce que le système de coupe (25) est relié par une tige d'accouplement (26) à une barre de traction (8), sur l'autre extrémité de laquelle agit un ressort de traction (27) qui est fixé à une entretoise (14) du bâti, de manière que le ressort de traction tente de maintenir le système de coupe (25) à sa position hors de fonctionnement et en ce que sur le bras (12) de guidage du fil est placé un entraîneur (9) qui sollicite l'extrémité de la barre de traction (8) au cours du mouvement de pivotement du bras (12) de guidage du fil, pour déplacer le système de coupe (25) à sa position de coupe ou bien passe en dessous de cette extrémité de la barre de traction (8), pour laisser le système de coupe (25) à sa position hors de fonctionnement, la position de la barre de traction (8) relativement à l'entraîneur (9) étant réglable au moyen d'un levier à deux bras (7) logé pivotant et d'une came double de commande (1) du bras (12) de guidage de fil, de manière que l'entraîneur (9) sollicite la barre de traction (8) au plus tard après deux mouvements successifs de pivotement du bras (12) de guidage du fil.

2. Dispositif selon la revendication (1), caractérisé en ce que le levier à deux bras (7) repose, chargé par ressort, sur la came double de commande (1), qui est fixée à une roue à cliquet (28) logée coaxiale au tourillon (3) du bras (12) de guidage du fil, que peut commuter un levier à cliquet (4) du bras (12) de guidage du fil.

3. Dispositif selon la revendication 2, caractérisé en ce que le levier à cliquet (4) est fixé à un

EP 0 185 919 B1

tourillon (29), qui est reçu pivotant au moyen d'un levier (6) sur lequel agit un ressort (5) de manière que le levier à cliquet (4) puisse être conduit à une position hors de prise avec la roue à cliquet (28).

Fig.1

Fig.3

Fig.2

Fig.4

Fig.5